# EUROPÄISCHE PATENTSCHRIFT

(11) **EP 0 404 085 B1**
(45) Veröffentlichungstag und Bekanntmachung des Hinweises auf die Patenterteilung: **09.06.1993**
(21) Anmeldenummer: 90111609.5
(22) Anmeldetag: 20.06.1990
(51) Int. Cl.: A23K 1/165

(54) **Verwendung von Pankreatin enthaltendem Futter oder Prämix für Rennpferde und Rennkamele**
Use of pancreatin containing feed or premix for race-horses and race-camels
Utilisation de fourrage ou prémélange de fourrage contenant de la pancréatine pour les chevaux ou chameaux de course

(30) Priorität: 23.06.1989 DE 3920561
(43) Veröffentlichungstag der Anmeldung: 27.12.1990
(73) Patentinhaber: KNOLL AG, D-67061 Ludwigshafen (DE)
(72) Erfinder: Johna, Josef, D-6704 Mutterstadt (DE); Rasthofer, Lothar, D-8000 München 80 (DE); Daum, Hermann, Dr., D-6943 Birkenau (DE)
(74) Vertreter: Karau, Wolfgang, Dr.

(56) Entgegenhaltungen:
- DE-A- 2 602 260
- DE-A- 2 626 109
- GB-A- 826 033
- US-A- 2 878 123
- CHEMICAL ABSTRACTS, Band 92, Nr. 3, 21. Januar 1980, Seite 572, Zusammenfassung Nr. 21139s, Columbus, Ohio, US; U. DOTTA et al.: "Studies on growth, digestibility, and some parameters of blood chemistry and serum enzymes in preruminant calves fed diets containing added hydrolytic enzymes"
- CHEMICAL ABSTRACTS, Band 97, Nr. 3, 19. Juli 1982, Seite 609, Zusammenfassung Nr. 22648x, Columbus, Ohio, US; & JP-A-8247451

## Beschreibung

Die Erfindung betrifft vorzugsweise die Verwendung von geschmacksneutralisiertem und/oder aromatisiertem Futter oder eines Prämix für Rennpferde und Rennkamele, das zur Vermeidung von Verdauungsstörungen, aber auch zur generellen Förderung der Verdauung tierisches Pankreatin enthält.

Verdauungsstörungen bei Hunden werden gelegentlich mit magensaftresistenten Pankreatin-Tabletten aus der Humanmedizin behandelt, meist ohne Erfolg, weil die Tablette unzerkaut den Magen passieren muß.

Es ist auch bekannt, daß zur Behandlung von Verdauungsstörungen von Pflanzenfressern Milchsäure produzierende Bakterien verwendet werden. Diese verstärken zunächst den Durchfall und stellen erst langsam die natürliche Darmflora wieder her. Die Tiere werden also zunächst zusätzlich geschwächt.

GB-A-826 033 beschreibt den Zusatz von proteolytischen Enzymen zur Wachstumsförderung von neugeborenen Ferkeln, die noch kein ausreichend funktionierendes Verdauungssystem haben.

DE-A-26 02 260 beschreibt Futtermittelzusätze für die Aufzucht von Jungtieren in Form von Enzymsuspensionen in flüssigem Fett, das auf stärke- und eiweißhaltiges Futter augesprüht wird. Für Pferde und Kamele ist dieses Futter und der Fettzusatz nicht geeignet.

DE-A-26 26 109 beschreibt magensaftresistent überzogene Enzympräparate.

Gemäß Chem. Abstr. 97, S. 609 (1982), Nr. 22648x, wird eine Verdauungshilfe für Pferde in Form säureresistenter Enzyme vorgeschlagen.

Abgesehen davon, daß Verdauungsstörungen bei Rennpferden und Rennkamelen bei aller Vorsicht immer wieder vorkommen, wird die Verdauung auch beim Tier psychisch beeinflußt. Die Hektik vor Rennen oder Wettkämpfen überträgt sich auf die bekanntlich sehe sensiblen Rennpferde und Rennkamele. Das kann die Verdauung negativ beeinflussen. Die auf Hochleistung getrimmten Tiere sind gerade dann, wenn es darauf ankommt, nicht in optimaler Verfassung. Neben psychischen Einflüssen ist die Ernährung von weit größerer Bedeutung. Futtermittelwechsel, nasses Gras, Öle und Fette als Futterzusatz und nicht ausreichende Versorgung mit Verdauungsenzymen können zu einer Fehlverdauung führen. Am gravierendsten ist folgendes: das Bestreben der Sport- und Zuchtpferdebesitzer, die Tiere möglichst leistungfähig zu machen, führt in der Regel zu einer Überversorgung der Tiere mit Eiweiß und Fetten. Die Folge sind häufig Verdauungsstörungen (Blähungen, Durchfall, Koliken), verbunden mit Gewichtsverlust und Schwächung, also genau das, was man zu vermeiden sucht. Die gestörte Darmflora ermöglicht ein übermäßiges wachstrum von nichtphysiologischen Bakterien und führt zur Entstehung von Toxinen, die die Leber schädigen, das Blutbild negativ beeinflussen und sogar zu Ödembildungen führen können. Die bisher üblichen medikamentösen Behandlungen beseitigen nur einzelne Symptome, ändern jedoch nichts am Gesamtbild. Es bestand daher ein dringendes Bedürfnis nach einer Methode, die die Verdauungsstörungen mit all ihren Folgeerscheinungen beseitigt oder gar nicht erst aufkommen läßt.

Der Erfindung lag daher die Aufgabe zugrunde, ein Futter oder Prämix zur Vermeidung und Behebung von Verdauungsstörungen bei Rennpferden und Rennkamelen zu entwickeln, und zwar ohne den genannten Nachteil der Milchsäure produzierenden Bakterien.

Die Lösung der Aufgabe besteht in der Verfütterung von Pankreatin in wirksamer Menge an Pferde und Kamele, die im Sport eingesetzt werden.

Versuche zeigten, daß ein ausreichender Zusatz von Pankreatin zum gewohnten Futter zur nachhaltigen Besserung und Beseitigung o.g. Störungen führt. Überraschenderweise hat sich Schweinepankreatin, das sich in seiner Zusammensetzung (Enzymmuster) grundlegend von dem reiner Pflanzenfresser unterscheidet, hierbei besonders bewährt.

Die Tagesdosis kann je nach Schwere der Verdauungsstörung im Bereich von 5 bis 200, vorzugsweise 5 bis 20 mg/kg Körpergewicht gewählt werden. Die Dosis zur Vorbeugung, also als genereller Futterzusatz, wird eher im unteren Teil des genannten Bereichs liegen. Das Pankreatin wird manuell oder maschinell unter das Futter gemischt. Es wird in der Regel nicht in reiner Form, sondern als 0,1 bis 50 %ige Zubereitung (Prämix) im Gemisch mit Streckmitteln (inerten Stoffen) wie Calcitmehl, das auch als mineralischer Ergänzungsstoff nützlich ist, oder trockenen Futtermitteln wie Maismehl, Sojamehl, Kleie oder Schrot eingesetzt. Das erleichtert die Dosierung und das Mischen mit dem Futter. Andere den Verdauungstrakt beeinflussende Zusätze sind nicht erforderlich.

Aufgrund der völlig anderen Verhältnisse im Verdauungstrakt, insbesondere im Vormagen, der pflanzenfressenden Tiere erübrigt sich hier der bei Menschen und fleischfressenden Tieren erforderliche Schutz des Pankreatins vor der Magensäure. Bei akuten Verdauungsstörungen hat sich Schweinepankreatin bei Rennpferden ebenso bewährt wie beim vorbeugenden Einsatz als genereller Futtermittelzusatz oder auch nur wäheend einiger Tage vor Pferderennen. Die Erfahrungen bei Pferden lassen sich auf Kamele übertragen.

Um die Futterakzeptanz zu verbessern, ist es zweckmäßig, den Geschmack des Pankreatins vor oder nach der Futtermittelzubereitung durch Geschmacksneutralisierung und/oder Aromatisierung zu kaschieren. Dies geschieht nach an sich für andere Produkte bekannten Methoden durch Zumischen oder Aufbringen von Substanzen auf die Partikeln des Pankreatins oder der pankreatinhaltigen Futtermittelzubereitung. Diese Substanzen dürfen keinen unangenehmen Eigengeschmack haben, die Aktivität des Pankreatins nicht beeinträchtigen und müssen physiologisch unbedenklich sein. Die Aufbringung muß unter schonenden Bedingungen erfolgen, d.h. unter Ausschluß hoher Temperaturen (max. ca. 50°C), von Feuchtigkeit und hohen Scherkräften. Geeignete Substanzen sind z.B. Lecithin, Cellulose, Mono-, Di- und Triglyceride. Geeignete Aromatisierungsmittel sind z.B. die Aromen von Pfefferminz, Artischocken, grünen Äpfeln, Kokos, Vanille. Das Aufbringen kann z.B. durch Aufsprühen einer (z.B. alkoholischen) Lösung oder Schmelze im Wirbelbett oder Dragierkessel erfolgen.

Das Pankreatin wird durch Gefriertrocknen und Entfetten von tierischen Pankreasdrüsen, vorzugsweise vom Schwein, gewonnen. Die Konzentrationsangaben für das Prämix beziehen sich auf das so gewonnene Pankreatin, unabhängig von dessen jeweiligem Enzymgehalt. - Besonders bewährt hat sich Schweinepankreatin, das gemäß EP-B-115 023 gewonnen wurde.

### Beispiel 1

Traberstute 4-jährig

Vorbericht: restistenter Durchfall, vorbehandelt durch Tierarzt mit Sulfonamiden und Spasmolytika. Teilweise Verweigerung der Aufnahme von Krippenfutter, insgesamt sehr wählerisches Futterverhalten, überhöhte Aufnahme von Stroh, schlechte Trainingsleistung mit sehr schneller Ermüdung, übermäßiges Schwitzen. Nach Verabreichung von 20 g Pankreatin pro Tag, das in den ersten Tagen zwangsweise verabreicht werden muffte (per Maulspritze), konnte am 2. Tag der Eingabe bereits deutlich verbessertes Futterverhalten festgestellt werden, die zugeteilte Kraftfutterration wurde vollständig gefressen. Verschwinden der Durchfallsymptomatik 9 Tage nach Beginn der Verabreichung. Die gesamte Dauer der Verabreichung betrug 4 Wochen, ein Rückfall konnte nicht beobachtet werden (bis 6 Monate nach Behandlungsende).

### Beispiel 2

Trakehnerstute 8-jährig

Chronisch rezidivierende Obstipationskoliken im Abstand von einer Woche bis 14 Tagen. Nach Zugabe von 8 g Pankreatin pro Tag traten keine Koliken mehr auf. Das Pferd war im viermonatigen Beobachtungszeitraum kolikfrei.

### Beispiel 3

Halbblüter 4-jährig

Das Pferd wurde im September eingestallt und erkrankte im Oktober an Durchfall. Neben dem weichen und übel riechenden Kotabsatz wurde ein extremer Gewichtsverlust sowie starker Leistungsabfall festgestellt. Erkrankungsdauer insgesamt 4 Monate, sämtliche Maßnahmen waren erfolglos. Die Fütterung setzte sich zusammen aus 5 kg Heu und 5 kg Hafer, verteilt auf 3 Mahlzeiten. 3 Tage nach Beginn der einwöchigen Zugabe von 6 g Pankreatin pro Tag war der Durchfall gestoppt. Das Pferd nahm an Gewicht zu, es erhielt noch einen Monat lang 4 g Pankreatin pro Tag und blieb klinisch unauffällig.

### Beispiel 4

Schulpferd

Das Pferd litt seit einem halben Jahr an graduell unterschiedlichem Durchfall, die Fütterungsweise wurde mehrmals geändert, allerdings erfolglos. Nach Gabe von 10 g Pankreatin pro Tag verschwand der Durchfall innerhalb von 2 Tagen. Die Pankreatingabe wurde 14 Tage fortgesetzt.

### Beispiel 5

Häflingerstute 2-jährig

Häufige Verstopfungskoliken; nach Ausschluß anderer Ursachen (Fütterung, Zähne usw.) Unterstützung der Verdauung mit 10 g Pankreatin täglich proportional auf die Mahlzeiten verteilt; im Beobachtungszeitraum von 4 Monaten traten keine Koliken mehr auf.

### Beispiel 6

Haflingerstute 9-jährig

Zweimal kurz nacheinander Krampfkoliken; nach Gabe von 10 g Pankreatin täglich im sechswöchigen Beobachtungszeitraum war kein Kolikanfall mehr zu beobachten.

### Beispiel 7

Traberwallach 8-jährig

Das Pferd wird wegen seines schwachen Nervenkostüms als Freizeitpferd genutzt, herabgesetzter Leistungswille bis Widersetzlichkeit; chronisch schlecht geformter Kot, Blähbauch, Abmagerung. Eine Änderung des Futtermittels zeigte keinen Erfolg.

Nach 10 g Pankreatin täglich:
nach 14 Tagen deutlich besseres Aussehen, Gewichtszunahme, gute Kotformung, allmählicher Rückgang des Blähbauches, verbesserter Leistungswille.

### Beispiel 8

Traberhengst 8-jährig

Schlechte Kotformung, chronische Verdauungsstörungen mit übelreichendem, schlecht geformtem Kot und Blinddarmtympanie, schlechtes Nervenkostüm. Nach 10 g Pankreatin pro Tag:
verbesserter Gesamteindruck: vermehrte Munterkeit, bessere Kotformung, Geruch teils besser, Rückgang der Flatulenz und Tympanie, gesteigerte Leistungsfähigkeit und Selbstsicherheit; überraschender zweiter Platz nach erstem Rennen.

### Beispiel 9

Warmblutwallach ca. 20-jährig
Chronische Durchfälle im Dreiwochenzyklus.
10 g Pankreatin täglich führten sofort zu relativ hellem, gut geformten Kot.

### Beispiel 10

Traberhengst 4-jährig
schlechte Rennleistungen, hoher Substanzverlust, Erhöhung der Gamma-GT und Bilirubin im Serum; trotz Rennpause keine Besserung;
10 g Pankreatin täglich führten rasch zu Gewichtszunahme, Rückkehr der Leberwerte in den Normbereich, verbesserten Arbeitsleistungen.

### Beispiel 11

Traberstute 4-jährig
mäßige Rennleistungen, wenig Kampfgeist im Finish; Stute wirkte aufgezogen, hatte kleine, harte Kotballen; chronische, resistente Erhöhung der Leberwerte (Gamma-GT, Bilirubin). Leberschutzinfusionen, Lactofermente, Homöopathika erwiesen sich als wirkungslos.
10 g Panreatin täglich:
Verbesserung des Aussehens, normal gebällter Kot, nach ca. drei Wochen trotz Training und Starts (mit nun verbessertem Abschneiden) Rückkehr von Bilirubin in den Normalbereich, allmählicher Abfall der Gamma-GT im Serum.

## Patentansprüche

1. Verwendung von pankreatinhaltigem Futter oder Prämix für Rennpferde und Rennkamele, wobei das Pankreatin nicht gegen Säure geschützt ist.

2. Verwendung von geschmacksneutralisiertem oder aromatisiertem pankreatinhaltigem Futter oder Prämix für Rennpferde und Rennkamele, wobei das Pankreatin nicht gegen Säure geschützt ist.

3. Verwendung von Futter oder Prämix nach Anspruch 1 oder 2, wobei neben Pankreatin kein anderes den Verdauungstrakt beeinflussendes Mittel verwendet wird.

4. Verwendung von Futter oder Prämix für Rennpferde und Rennkamele nach einem der Ansprüche 1 bis 3, wobei das Futter 5 bis 200 mg Pankreatin pro kg Körpergewicht und Tag enthält.

5. Verwendung von pankreatinhaltigem Futter oder Prämix für Rennpferde und Rennkamele nach einem der Ansprüche 1 bis 4, wobei das Pankreatin von Schweinen stammt.

## Claims

1. The use of pancreatin-containing feed or premix for racehorses and racing camels, wherein the pancreatin is not protected from acid.

2. The use of taste-neutralized or flavored pancreatin-containing feed or premix for racehorses and racing camels, wherein the pancreatin is not protected from acid.

3. The use of feed or premix as claimed in claim 1 or 2, wherein apart from pancreatin no other agent influencing the digestive tract is used.

4. The use of feed or premix for racehorses and racing camels as claimed in any of claims 1 to 3, wherein the feed contains from 5 to 200 mg of pancreatin per kg of body weight and day.

5. The use of pancreatin-containing feed or premix for racehorses and racing camels as claimed in any of claims 1 to 4, wherein the pancreatin originates from pigs.

## Revendications

1. Utilisation de nourriture ou de prémélange contenant de la pancréatine, pour des chevaux et chameaux de course, la pancréatine n'étant pas protégée contre les acides.

2. Utilisation de nourriture ou de prémélange contenant de la pancréatine, à goût neutralisé ou aromatisés, pour des chevaux ou chameaux de course, la pancréatine n'étant pas protégée contre les acides.

3. Utilisation de nourriture ou de prémélange selon l'une des revendications 1 ou 2, sans administrer, outre la pancréatine, d'autres produits influant sur le transit intestinal.

4. Utilisation de nourriture ou de prémélange pour des chevaux et chameaux de course, suivant l'une des revendications 1 à 3, la nourriture contenant 5 à 200 mg de pancréatine par kilogramme de poids du corps et par jour.

5. Utilisation de nourriture ou de prémélange contenant de la pancréatine, pour des chevaux et des chameaux de course, suivant l'une des revendications 1 à 4, la pancréatine provenant du porc.
